# EUROPEAN PATENT APPLICATION

(11) **EP 2 803 574 A1**
(43) Date of publication of application: **19.11.2014**
(21) Application number: 14167984.5
(22) Date of filing: 12.05.2014
(51) Int. Cl.: B64D 11/02, B64D 11/04, B64D 11/06, B64D 11/00

(54) **Multifunctional aircraft monument and aircraft area**

(30) Priority: 15.05.2013 DE 102013008290
(71) Applicant: Airbus Operations GmbH, 21129 Hamburg (DE)
(72) Inventor: Moje, Sabrina, 21129 Hamburg (DE); Breuer, Matthias, 21129 Hamburg (DE)
(74) Representative: Schicker, Silvia

(57) **Abstract**

An aircraft monument (10) for installation in an aircraft cabin comprises a sanitary module (12). The sanitary module (12) comprises a toilet (14) which adapted to be used as a sanitary facility for passengers when an aircraft equipped with the aircraft monument (10) is in cruising flight. The toilet (14) is further adapted to be used as a flight attendant seat if necessary. The aircraft monument (10) also comprises a door opening (24) which is adapted, when the aircraft monument (10) is installed in an aircraft, to give a person sitting on the toilet (14) which is being used as a flight attendant seat an unimpeded view of an area (32) of the aircraft cabin which is arranged in front of the aircraft monument (10) in the direction of viewing of the person sitting on the toilet (14) which is being used as a flight attendant seat.

## Description

The invention relates to an aircraft monument which is intended for installation in an aircraft cabin and which comprises at least one sanitary module with an on-board toilet. The invention also relates to an aircraft area which comprises an aircraft monument of this kind.

Modern commercial aircraft are usually equipped with on-board kitchens, so-called "galleys", which are known, for example, from DE 10 2006 023 047 B4 or US 7,780,114 B2. As a rule, the galleys are installed in the door-entry areas of the aircraft cabin and have a carcass which has a substantially rectangular floor plan and is oriented parallel to a door aisle extending towards an aircraft door. Passengers are able to pass out of, or into, the aircraft via the door aisle which extends substantially perpendicularly to a main aisle running along a longitudinal axis of the aircraft cabin.

From DE 10 2011 109 390 A1 or WO 2013/017290 A1, an aircraft monument for installation in an aircraft cabin is also known, which comprises a sanitary module with a sanitary facility and also a kitchen module which is arranged adjacently to said sanitary module. The kitchen module has a trolley parking space and also a working area, said trolley parking space being separated from the sanitary module by a partition. The aircraft monument described in DE 10 2011 109 390 A1 or WO 2013/017290 A1 makes it possible to reduce the installation space requirement of an on-board kitchen within an aircraft cabin without making the handling of trolleys filled with service products more difficult for the cabin staff, and is particularly suitable for installation in aircraft which are used on short-haul flights in the lower price bracket, on which passengers are offered only a reduced service.

Finally, DE 10 2010 012 989 A1 or WO 2011/116982 A2 proposes equipping a sanitary module which is intended for installation in an aircraft cabin with a first trolley parking place in its interior space for accommodating at least one trolley, which is suitable for receiving supplies for the passengers in the aircraft cabin, in the interior space of the sanitary module. A second trolley parking place is also provided adjacently to said sanitary module. During takeoff and landing, i.e. during the flight phases in which the sanitary module is, in any case, not available to the passengers for use for safety reasons, the first trolley parking place in the interior space of the sanitary module can be used for accommodating one or more trolleys. When the aircraft is at cruising altitude, on the other hand, the second trolley parking place is available for accommodating the trolley or trolleys.

The underlying object of the invention is to indicate an installation-space-saving and weight-saving multifunctional aircraft monument. The underlying object of the invention is also to make available an aircraft area equipped with an aircraft monument of this kind.

This object is achieved by means of an aircraft monument having the features in Claim 1 and an aircraft area having the features in Claim 9.

An aircraft monument which is intended for installation in an aircraft cabin comprises a sanitary module. Said sanitary module is equipped with a toilet which is adapted to be used as a sanitary facility for passengers when an aircraft equipped with the aircraft monument is in cruising flight. Furthermore, the toilet of the sanitary module is adapted to be used as a flight attendant seat if necessary. In other words, the toilet provided in the sanitary module of the aircraft monument fulfils the double function of serving, on the one hand, as a conventional sanitary facility for passengers, but on the other hand, of forming a flight attendant seat in certain operating phases of an aircraft equipped with the aircraft monument, for example during the takeoff and landing of the aircraft and also in the event of turbulence occurring during flight. In addition to the toilet, the sanitary module may comprise additional sanitary facilities such as, for example, a washbasin with a water tap, a mirror and/or a cabinet for accommodating toilet paper, paper hand-towels or the like.

The toilet which can be used as a flight attendant seat is preferably designed and dimensioned in such a way that it meets the requirements imposed upon a flight attendant seat, particularly as regards its mechanical load-bearing capacity. In particular, the toilet which can be used as a flight attendant seat may be so designed and dimensioned, and also fastened to a floor of the aircraft cabin and/or to a wall of the aircraft monument in such a way, that it is able to withstand a predetermined maximum force which is laid down by corresponding licensing regulations. The maximum force in question is, in particular, a calculated maximum force which acts, in an emergency, upon the toilet which is being used as a flight attendant seat. For example, a force which acts upon the toilet which is being used as a flight attendant seat when said toilet which is being used as a flight attendant seat is exposed to an acceleration of 9G or 16G, may be assumed as the predetermined maximum force. Furthermore, the toilet which can be used as a flight attendant seat is preferably designed and dimensioned in such a way that it meets the ergonomic requirements imposed upon a flight attendant seat. Said toilet which can be used as a flight attendant seat may, for example, comprise a seat cushion which is fitted on an upper surface of a toilet lid. Furthermore, a backrest cushion and/or a head cushion may be fitted in an area, which is located behind the toilet, of a wall of the aircraft monument. There may also be provided, within reach of the toilet in the sanitary module, suitable stowage compartments in which there may be accommodated articles which are needed by a flight attendant who is sitting on the toilet which is being used as a flight attendant seat.

The sanitary module of the aircraft monument also comprises a door opening which is adapted, when the aircraft monument is installed in an aircraft, to give a person sitting on the toilet which is being used as a flight attendant seat an unimpeded view of an area of the aircraft cabin which is arranged in front of the aircraft monument in the direction of viewing of said person sitting on the toilet which is being used as a flight attendant seat. The door opening is consequently positioned in such a way, with respect to the toilet which can be used as a flight attendant seat, that a person sitting on the toilet which is being used as a flight attendant seat is able to have a fully extensive overview of the area of the aircraft cabin which is arranged in front of the aircraft monument in the direction of viewing of said person sitting on the toilet which is being used as a flight attendant seat. The door opening of the sanitary module can preferably be closed by means of a door. When the toilet arranged in the sanitary module is being used as a flight attendant seat, however, the door is preferably in an open condition and unblocks the door opening of said sanitary module.

The functions of a conventional sanitary module and of a flight attendant seat are integrated into the aircraft monument. Consequently, said aircraft monument makes it possible to dispense with a separate flight attendant seat. It is thereby possible to achieve savings in installation space and in weight. The installation space saved can be used for increasing the number of passenger seats in the aircraft cabin. As an alternative to this, the length of the aircraft can be shortened accordingly. In addition, the aircraft monument meets high safety standards, since a person sitting on the toilet which is being used as a flight attendant seat is able to have a good overview of the area of the aircraft cabin which is arranged in front of the aircraft monument in the direction of viewing of said person sitting on the toilet which is being used as a flight attendant seat.

The aircraft monument may have a substantially circular, square or rectangular floor plan. For example, said aircraft monument may be designed in the form of a column having a circular floor plan. If desired, the monument may extend as far as a ceiling of the aircraft cabin.

In addition to the sanitary module, the aircraft monument may comprise a kitchen module and/or at least one stowage compartment module. For example, the sanitary module and a kitchen module belonging to the aircraft monument may constitute areas of said aircraft module that face away from one another, and be separated from one another by a partition running through an interior space of said aircraft monument. In a similar manner, two stowage compartment modules may constitute mutually opposed areas of said aircraft monument. The combining of various functionalities in a single aircraft monument permits a centralising of systems, for example the centralising of supply systems which are needed for supplying said aircraft monument. By this means it is possible to produce a self-contained aircraft monument, in which the various functional areas can be connected, for example via common connections, to a central water supply system, a central power supply system and/or a central waste water disposal system belonging to the aircraft.

The aircraft monument may also comprise an additional sanitary module. For example, said aircraft monument may be designed in such a way that the sanitary module and the additional sanitary module constitute areas of the aircraft monument that face away from one another. The additional sanitary module may be constructed in the form of a conventional sanitary module.

Preferably, however, the additional sanitary module also comprises an additional toilet which is adapted to be used as a sanitary facility for passengers when an aircraft equipped with the aircraft monument is in cruising flight, and which further is adapted to be used as a flight attendant seat if necessary. The additional toilet of the additional sanitary module may be designed in the manner described above with respect to the toilet of the sanitary module. The additional sanitary module may also comprise an additional door opening which is adapted, when the aircraft monument is installed in an aircraft, to give a person sitting on the additional toilet which is being used as a flight attendant seat an unimpeded view of an area of the aircraft cabin which is arranged in front of the aircraft monument in the direction of viewing of said person sitting on the additional toilet which is being used as a flight attendant seat. The additional door opening of the additional sanitary module may be closable by means of an additional door.

If the aircraft monument comprises two sanitary modules, the door opening of the sanitary module and the additional door opening of the additional sanitary module are preferably arranged in the area of sections of the aircraft monument which are located substantially opposite one another. The aircraft monument can then be installed in the aircraft cabin in such a way that a person sitting on the toilet of the sanitary module which is being used as a flight attendant seat has an unimpeded view of a first area of the aircraft cabin, while a person sitting on the additional toilet of the additional sanitary module which is being used as a flight attendant seat has an unimpeded view of a second area of said aircraft cabin. The first and second areas of the aircraft cabin may, for example, be constituted by an area of said aircraft cabin that lies in front of the aircraft monument and by an area of said aircraft cabin that lies behind the aircraft monument, viewed in the direction of flight of an aircraft equipped with said aircraft monument.

The door for closing the door opening of the sanitary module may be constructed in the form of a sliding door. In addition, or as an alternative, to this, the additional door for closing the additional door opening of the additional sanitary module may be constructed in the form of a sliding door. A door which is constructed in the form of a sliding door is particularly well suited for giving a person sitting on the toilet of the sanitary module which is being used as a flight attendant seat, or a person sitting on the additional toilet of the additional sanitary module which is being used as a flight attendant seat, an unimpeded view of a corresponding area of the aircraft cabin.

The sanitary module may comprise a safety belt arrangement which makes it possible for a person sitting on the toilet which is being used as a flight attendant seat to fasten the seat belt. In addition, or as an alternative, to this, the additional sanitary module may comprise an additional safety belt arrangement which makes it possible for a person sitting on the additional toilet which is being used as a flight attendant seat to fasten the seat belt. The safety belt arrangement and/or the additional safety belt arrangement may be fastened to the toilet or additional toilet, respectively, or to a wall of the aircraft monument.

The toilet of the sanitary module is preferably fastened by means of a fastening device to a wall of the aircraft monument which is designed and dimensioned in such a way that it is capable of dissipating, via said wall of the aircraft monument, a predetermined maximum force which may be introduced into the toilet when said toilet is being used as a flight attendant seat. In addition, or as an alternative, to this, the additional toilet of the additional sanitary module may be fastened by means of an additional fastening device to a wall of the aircraft monument which is designed and dimensioned in such a way that it is capable of dissipating, via said wall of the aircraft monument, a predetermined maximum force which may be introduced into the additional toilet when said additional toilet is being used as a flight attendant seat. If the aircraft monument comprises a sanitary module and an additional sanitary module, the toilet and the additional toilet may be fastened to a wall of said aircraft monument which separates the sanitary module from the additional sanitary module.

The maximum force which the fastening device or additional fastening device has to dissipate via the wall of the aircraft monument is, once again, predetermined by corresponding licensing regulations. In particular, the maximum force in question is, once again, a calculated maximum force which acts, in an emergency, upon the toilet which is being used as a flight attendant seat or upon the additional toilet which is being used as a flight attendant seat. For example, a force which acts upon the toilet which is being used as a flight attendant seat, or upon the additional toilet which is being used as a flight attendant seat, when said toilet which is being used as a flight attendant seat or said additional toilet which is being used as a flight attendant seat is exposed to an acceleration of 9G or 16G, may be assumed as the predetermined maximum force.

If the toilet and/or the additional toilet is/are fastened by means of a fastening device to a wall of the aircraft monument which allows the dissipation, via said wall of the monument, of forces acting, in the course of operation of the toilet which is being used as a flight attendant seat or of the additional toilet which is being used as a flight attendant seat, upon said toilet which is being used as a flight attendant seat or upon said additional toilet which is being used as a flight attendant seat, it is possible to dispense with fixing the toilet or additional toilet to the floor of the aircraft cabin in a force-transmitting manner. In the event of a change in the cabin layout which is associated with a varying of the position of the aircraft monument, it is then possible, in advantageous manner, to dispense with a corresponding adaptation of the structural attachment of the toilet or additional toilet to the floor of the aircraft cabin. If desired or necessary, however, it is also possible to make provision for fastening the toilet or additional toilet to the floor of the aircraft cabin in a force-transmitting manner.

An aircraft area comprises a main aisle which extends along a longitudinal axis of an aircraft cabin. Said main aisle may, for example, separate two passenger seating areas of the aircraft cabin from one another, it being possible for each passenger seating area to have a plurality of rows of passenger seats which are arranged one behind another, each having three passenger seats. The aircraft area also comprises a door aisle which extends, substantially perpendicularly to the main aisle, between a first and a second aircraft door. An above-described aircraft monument is arranged in the door aisle. As a result of the arrangement of the aircraft monument in said door aisle, a hitherto unused area of the aircraft cabin is used for monument installation. The installation space used in conventional aircraft cabin layouts for the installation of a sanitary module, a kitchen module and/or a stowage compartment module can consequently be used in another way, for example for additional passenger seats.

The aircraft monument is preferably arranged in the door aisle in such a way that the sanitary module faces towards a rearward area of the aircraft cabin, referred to the direction of flight of an aircraft equipped with the aircraft area. If the aircraft monument comprises an additional sanitary module, said aircraft monument is preferably arranged in the door aisle in such a way that the additional sanitary module faces towards a forward area of the aircraft cabin, referred to the direction of flight of an aircraft equipped with the aircraft area.

This arrangement of the aircraft monument guarantees that a person sitting on the toilet of the sanitary module which is being used as a flight attendant seat is able to monitor the rearward area of the aircraft cabin in an unimpeded and direct manner. In a similar way, a person sitting on the additional toilet of the additional sanitary module which is being used as a flight attendant seat is able to monitor the forward area of the aircraft cabin in an unimpeded and direct manner.

The aircraft monument is preferably arranged substantially centrally within the door aisle. Such an arrangement of the aircraft monument makes it possible to use said aircraft monument as part of a directing system for emergency evacuations. In particular, the aircraft monument may fulfil a guiding function for persons who are moving along the main aisle towards the aircraft doors, since said persons are necessarily directed along the outer walls of the aircraft monument towards the aircraft doors. In the event of an emergency evacuation of the aircraft, this makes it possible to increase the door capacity, i.e. to increase the number of persons who are able to leave the aircraft via the aircraft doors per unit of time.

The aircraft monument is preferably arranged centrally within the door aisle, relative to the longitudinal axis of the aircraft cabin. The door opening of the aircraft monument may face towards a rearward area of the aircraft cabin, referred to the direction of flight of an aircraft equipped with the aircraft area. Furthermore, the additional door opening of the aircraft monument may face towards a forward area of the aircraft cabin, referred to the direction of flight of an aircraft equipped with the aircraft area. The door opening then allows a person sitting on the toilet an unimpeded view of the rearward area of the aircraft cabin, while the additional door opening gives a person sitting on the additional toilet an unimpeded view of the forward area of said aircraft cabin.

In particular, the door opening and/or the additional door opening may extend over an angular range of about 80 to 100°, in particular about 90°, of an outer wall of the aircraft monument. Such an angle of opening of the door opening and/or of the additional door opening is suitable, particularly in the case of an aircraft monument with a circular floor plan, for giving a person sitting on the toilet or additional toilet an unimpeded view of the rearward or forward area, respectively, of the aircraft cabin.

Preferred forms of embodiment of the invention will now be explained in greater detail with the aid of the appended diagrammatic drawings, in which:
- Figure 1: shows a three-dimensional representation of an aircraft area in which a first form of embodiment of an aircraft monument is arranged;
- Figure 2: shows a plan view of the aircraft area according to Figure 1;
- Figure 3: shows a plan view of an aircraft area in which the aircraft monument according to Figures 1 and 2 is arranged in another position of installation; and
- Figure 4: shows an aircraft area in which an alternative aircraft monument is arranged.

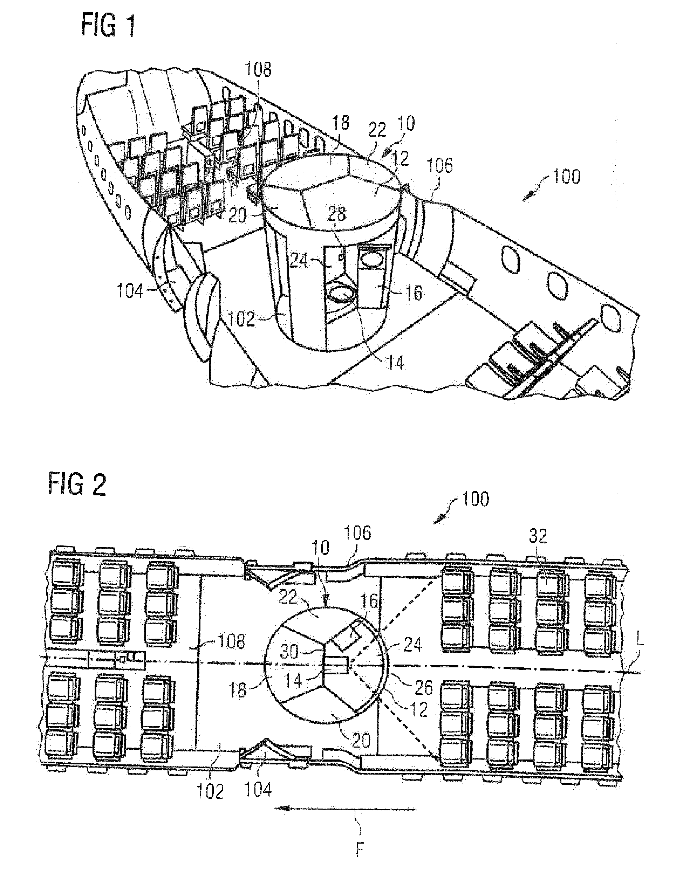

Figures 1 and 2 show an aircraft area 100 which is constituted by part of an aircraft cabin. An aircraft monument 10 is arranged in said aircraft area 100. The aircraft monument 10 comprises a sanitary module 12 which is equipped with a toilet 14 as well as other sanitary facilities, in particular a washbasin 16.

In addition, the aircraft monument 10, which is constructed in the form of a column with a circular floor plan, comprises a kitchen module 18 as well as two stowage compartment modules 20, 22. The sanitary module 12 and the kitchen module 18 constitute areas of the aircraft monument 10 that face away from one another. In a similar manner, the two stowage compartment modules 20, 22 constitute areas of the aircraft monument 10 that face away from one another. The sanitary module 12 has a door opening 24 that can be closed by means of a door 26 which is illustrated in Figure 2. Said door 26 is constructed in the form of a sliding door and can be displaced along an outer circumference of the aircraft monument 10 in such a way that the door opening 24 of the sanitary module 12 can be completely unblocked.

When an aircraft equipped with the aircraft monument 10 is in cruising flight, the toilet 14 of the sanitary module 12 can be used as a sanitary facility for passengers in the conventional way. In certain operating phases of the aircraft, on the other hand, for example during takeoff and landing of said aircraft and also when turbulence occurs during flight, the toilet 14 can be used as a flight attendant seat. For this purpose, the sanitary module 12 comprises a safety belt arrangement 28 which makes it possible for a person sitting on the toilet 14 which is being used as a flight attendant seat to fasten the safety belt. In addition, the toilet 14 meets all the structural and ergonomic requirements which are imposed upon a flight attendant seat. The toilet 14 may optionally be made usable as a flight attendant seat by folding down or folding out a seat element which may serve at the same time as a cover for said toilet 14. The operation of making the toilet 14 usable as a flight attendant seat may also comprise appropriate positioning and/or fastening of a backrest element which can be removed, latched in and/or folded down.

In the forms of embodiment of an aircraft monument 10 which are shown in Figures 1 to 4, the toilet 14 fastened, by means of a fastening device of which no further details are illustrated in the Figures, to a wall 30 of the aircraft monument 10 which is designed and dimensioned in such a way that it is capable of dissipating, via said wall 30 of the aircraft monument 10, a predetermined maximum force which may be introduced into the toilet 14 when said toilet 14 is being used as a flight attendant seat. In particular, the fastening device and the wall 30 of the aircraft monument 10 are capable of dissipating a force which acts upon the toilet 14 which is being used as a flight attendant seat when said toilet 14 which is being used as a flight attendant seat is exposed to an acceleration of 9G or 16G.

As can be seen particularly in Figure 2, the door opening 24 of the sanitary module 12 is arranged and dimensioned in such a way that it gives a person sitting on the toilet 14 which is being used as a flight attendant seat an unimpeded view of an area 32 of the aircraft cabin which is arranged in front of the aircraft monument 10 in the direction of viewing of said person sitting on the toilet 14 which is being used as a flight attendant seat.

The aircraft monument 10 is arranged in the aircraft area 100 centrally within a door aisle 102 which extends between a first and a second aircraft door 104, 106 and substantially perpendicularly to a main aisle 108 running along a longitudinal axis L of the aircraft cabin. The door aisle 102 consequently separates a forward part of the aircraft cabin from a rearward part of said aircraft cabin, viewed in the direction of flight F. The aircraft monument 10 arranged centrally within the door aisle 102 is consequently arranged between the forward and the rearward parts of the aircraft cabin, the sanitary module 12 and the door opening 24 being arranged centrally, relative to the longitudinal axis L of the aircraft cabin, and facing towards the rearward part of said aircraft cabin. The area 32 of the aircraft cabin which can be monitored by a person sitting on the toilet 14 of the sanitary module 12 which is being used as a flight attendant seat is consequently constituted, in the aircraft area arrangement according to Figures 1 and 2, by the rearward part of the aircraft cabin. The door opening 24 extends over an angular range of about 90° of an outer wall of the aircraft monument 10 and is therefore particularly well suited for giving a person sitting on the toilet 14 an unimpeded view of the rearward area of the aircraft cabin.

Because of its central arrangement within the door aisle 102, the aircraft monument 10 fulfils, in the event of an emergency evacuation, a guiding function for persons who are moving along the main aisle 108 towards the aircraft doors 104, 106. In particular, these persons are directed along the outer faces of the aircraft monument 10 towards the aircraft doors 104, 106.

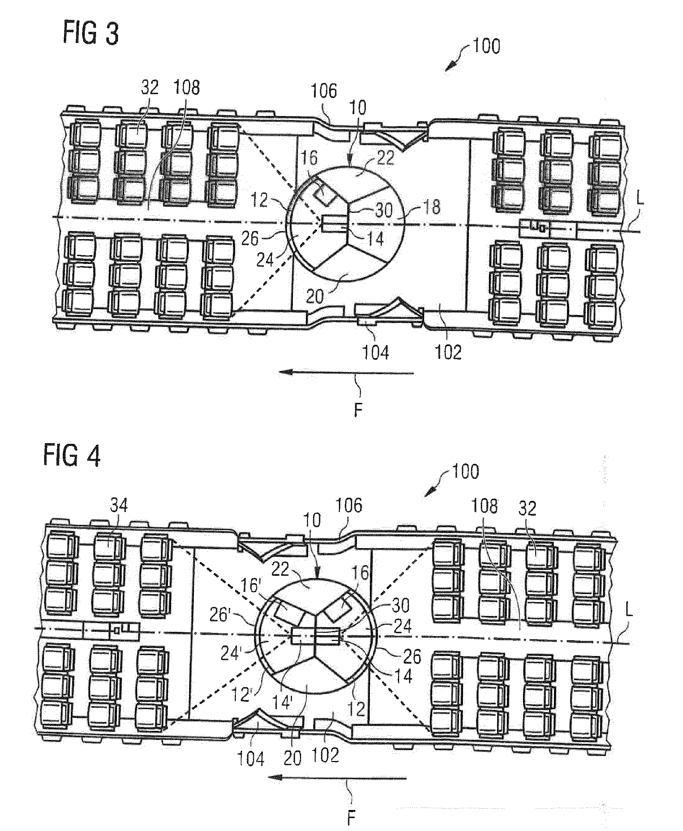

An aircraft area 100 which is illustrated in Figure 3 differs from the arrangement according to Figures 1 and 2 merely through the fact that the aircraft monument 10 in the aircraft area 100 according to Figure 3 is arranged centrally within the door aisle 102 of said aircraft area 100 in such a way that the sanitary module 12 faces towards a forward area of the aircraft cabin, viewed in the direction of flight F of the aircraft. In the arrangement according to Figure 3, the area 32 of the aircraft cabin which can be monitored by a person sitting on the toilet 14 of the sanitary module 12 which is being used as a flight attendant seat is consequently constituted by the forward area of the aircraft cabin. In other respects, the structure and functioning of the aircraft area 100 according to Figure 3 correspond to the structure and functioning of the arrangement according to Figures 1 and 2.

Finally, Figure 4 shows an aircraft area 100 in which there is arranged an aircraft monument 10 which comprises an additional sanitary module 12' instead of a kitchen module. The additional sanitary module 12' is equipped, in a manner similar to the sanitary module 12, with an additional toilet 14' as well as an additional washbasin 16'. Like the toilet 14 of the sanitary module 12, the additional toilet 14' of the additional sanitary module 12' is adapted to be used as a conventional sanitary facility for passengers when an aircraft equipped with the aircraft monument 10 is in cruising flight. However, in certain operating phases of the aircraft, for example during the takeoff and landing of the aircraft and also in the event of turbulence occurring during flight, the additional toilet 14' of the additional sanitary module 12' can be used as a flight attendant seat.

Like the sanitary module 12, the additional sanitary module 12' is also equipped with a safety belt arrangement (not illustrated in Figure 4) which makes it possible for a person sitting on the additional toilet 14' which is being used as a flight attendant seat to fasten the safety belt. In addition, the additional toilet 14' meets all the requirements which are imposed upon a flight attendant seat as regards its mechanical load-bearing capacity and its ergonomics. In particular, the additional toilet 14' of the additional sanitary module 12' is fastened, by means of an additional fastening device (not illustrated in Figure 4), to that wall 30 of the aircraft monument 10 which also carries the toilet 14 of the sanitary module 12. In a manner similar to the fastening device for fastening the toilet 14 to the wall 30, the additional fastening device for fastening the additional toilet 14' to said wall 30 is also designed and dimensioned in such a way that it is capable of dissipating, via the wall 30 of the aircraft monument 10, a predetermined maximum force which may be introduced, in an emergency, into the additional toilet 14' when said additional toilet 14' is being used as a flight attendant seat.

In addition, the additional sanitary module 12' is provided with an additional door opening 24' which gives a person sitting on the additional toilet 14' which is being used as a flight attendant seat an unimpeded view of an area 34 of the aircraft cabin which is arranged in front of the aircraft monument 10 in the direction of viewing of said person sitting on the additional toilet 14' which is being used as a flight attendant seat. The additional sanitary module 12' and the additional door opening 24' are arranged centrally, relative to the longitudinal axis L of the aircraft cabin. The additional door opening 24' extends over an angular range of about 90° of an outer wall of the aircraft monument 10 and is therefore particularly well suited for giving a person sitting on the additional toilet 14' an unimpeded view of the forward area of the aircraft cabin. The additional door opening 24' of the additional sanitary module 12' can be closed by means of an additional door 26' which is constructed in the form of a sliding door.

The sanitary module 12 and the additional sanitary module 12' constitute areas of the aircraft monument 10 that face away from one another. Consequently, the door opening 24 of the sanitary module 12 and the additional door opening 24' of the additional sanitary module 12' are arranged in the area of sections of the aircraft monument 10 which are located substantially opposite one another. If both the toilet 14 of the sanitary module 12 and the additional toilet 14' of the additional sanitary module 12' are used as flight attendant seats, unimpeded monitoring of both the forward area of the aircraft cabin and the rearward area of said aircraft cabin, viewed in the direction of flight F of the aircraft, is therefore possible. In other respects, the structure and functioning of the aircraft area 100 shown in Figure 4 correspond to the structure and functioning of the arrangement according to Figures 1 and 2.

## Claims

1. Aircraft monument (10) for installation in an aircraft cabin with a sanitary module (12), wherein said sanitary module (12) comprises:
- a toilet (14) which is adapted to be used as a sanitary facility for passengers when an aircraft equipped with the aircraft monument (10) is in cruising flight, and which adapted to be used as a flight attendant seat if necessary;
- a door opening (24) which is adapted, when the aircraft monument (10) is installed in an aircraft, to give a person sitting on the toilet (14) which is being used as a flight attendant seat an unimpeded view of an area (32) of the aircraft cabin which is arranged in front of the aircraft monument (10) in the direction of viewing of said person sitting on the toilet (14) which is being used as a flight attendant seat.

2. Aircraft monument according to Claim 1,
**characterised in that** the aircraft monument (10) has a substantially circular, square or rectangular floor plan.

3. Aircraft monument according to Claim 1 or 2,
**characterised in that** the aircraft monument (10) comprises a kitchen module (18), at least one stowage compartment module (20, 22) and/or an additional sanitary module (12').

4. Aircraft monument according to Claim 3,
**characterised in that** the additional sanitary module (12') comprises:
- an additional toilet (14') which is adapted to be used as a sanitary facility for passengers when an aircraft equipped with the aircraft monument (10) is in cruising flight, and which further is adapted to be used as a flight attendant seat if necessary;
- an additional door opening (24') which adapted, when the aircraft monument (10) is installed in an aircraft, to give a person sitting on the additional toilet (14') which is being used as a flight attendant seat an unimpeded view of an area (34) of the aircraft cabin which is arranged in front of the aircraft monument (10) in the direction of viewing of said person sitting on the toilet (14') which is being used as a flight attendant seat.

5. Aircraft monument according to Claim 4,
**characterised in that** the door opening (24) of the sanitary module (12) and the additional door opening (24') of the additional sanitary module (12') are arranged in the area of sections of the aircraft monument (10) which are located substantially opposite one another.

6. Aircraft monument according to one of Claims 1 to 5,
**characterised in that** a door (26) for closing the door opening (24) of the sanitary module (12) and/or an additional door (26') for closing the additional door opening (24') of the additional sanitary module (12') is/are constructed in the form of a sliding door.

7. Aircraft monument according to one of Claims 1 to 6,
**characterised in that** the sanitary module (12) comprises a safety belt arrangement (28) which makes it possible for a person sitting on the toilet (14) which is being used as a flight attendant seat to fasten the seat belt, and/or that the additional sanitary module (12') comprises an additional safety belt arrangement which makes it possible for a person sitting on the additional toilet (14') which is being used as a flight attendant seat to fasten the seat belt.

8. Aircraft monument according to one of Claims 1 to 7,
**characterised in that** the toilet (14) is fastened by means of a fastening device to a wall (30) of the aircraft monument (10) which is designed and dimensioned in such a way that it is capable of dissipating, via said wall (30) of the aircraft monument (10), a predetermined maximum force which may be introduced into the toilet (14) when said toilet (14) is being used as a flight attendant seat, and/or that the additional toilet (14') is fastened by means of an additional fastening device to a wall (30) of the aircraft monument (10) which is designed and dimensioned in such a way that it is capable of dissipating, via said wall (30) of the aircraft monument (10), a predetermined maximum force which may be introduced into the additional toilet (14') when said additional toilet (14') is being used as a flight attendant seat.

9. Aircraft area (100) having:
- a main aisle (108) which extends along a longitudinal axis (L) of an aircraft cabin;
- a door aisle (102) which extends, substantially perpendicularly to the main aisle (108), between a first and a second aircraft door (104, 106); and
- an aircraft monument (10) according to one of Claims 1 to 8 which is arranged in the door aisle (102).

10. Aircraft area according to Claim 9,
**characterised in that** the aircraft monument (10) is arranged in the door aisle (102) in such a way that the sanitary module (12) faces towards a rearward area of the aircraft cabin, referred to the direction of flight (F) of an aircraft equipped with the aircraft area (100), and/or that the additional sanitary module (12') faces towards a forward area of the aircraft cabin, referred to the direction of flight (F) of an aircraft equipped with the aircraft area (100).

11. Aircraft area according to Claim 9 or 10,
**characterised in that** the aircraft monument (10) is arranged substantially centrally within the door aisle (102).

12. Aircraft area according to Claim 9 or 11,
**characterised in that** the aircraft monument (10) is arranged centrally, relative to the longitudinal axis (L) of the aircraft cabin, within the door aisle (102), the door opening (24) of the aircraft monument (10) facing towards a rearward area of the aircraft cabin, referred to the direction of flight (F) of an aircraft equipped with the aircraft area (100), and/or the additional door opening (24') of the aircraft monument (10) facing towards a forward area of the aircraft cabin, referred to the direction of flight (F) of an aircraft equipped with the aircraft area (100).

13. Aircraft area according to one of Claims 9 to 12,
**characterised in that** the door opening (24) and/or the additional door opening (24') extend(s) over an angular range of about 80 to 100°, in particular about 90°, of an outer wall of the aircraft monument (10).
